# FASCICULE DE BREVET EUROPEEN

(11) **EP 1 553 159 B1**
(45) Date de publication et mention de la délivrance du brevet: **23.04.2008**
(21) Numéro de dépôt: 04425005.8
(22) Date de dépôt: 08.01.2004
(51) Int. Cl.: C11B 1/06, A23N 1/00, B30B 9/02

(54) **Procédé de malaxage d'une pâte d'olive**
Verfahren zum Kneten von Olivenpaste
Process for malaxation of olive paste

(43) Date de publication de la demande: 13.07.2005
(73) Titulaire: Tenuta la Novella S.r.l., 50022 Greve in Chianti (Florence) (IT)
(72) Inventeur: Picci, David, 50022 Greve in Chianti (Florence) (IT)
(74) Mandataire: Maillet, Alain

(56) Documents cités:
- EP-A- 1 211 303
- US-A- 3 857 866
- US-A- 4 808 426
- GARCIA A ET AL: "High-performance liquid chromatography evaluation of phenols in virgin olive oil during extraction at laboratory and industrial scale." JOURNAL OF THE AMERICAN OIL CHEMISTS' SOCIETY, vol. 78, no. 6, 2001, pages 625-629, XP001183589

## Description

L'invention concerne un procédé de malaxage d'une pâte d'olive. L'invention concerne aussi un dispositif de malaxage pour la mise en oeuvre d'un tel procédé. L'invention concerne aussi une pâte d'olive obtenue par un tel procédé. Elle trouve application dans le domaine de la fabrication d'huile d'olive.

La fabrication de l'huile d'olive comprend différentes étapes. La cueillette des olives, le lavage des olives, le broyage des olives pour obtenir une pâte. Cette pâte est ensuite malaxée pour concentrer les gouttes d'huile présentes dans les matières solides, par ce malaxage les gouttes d'huile se regroupent créant ainsi des gouttes plus grosses qui sont plus faciles à extraire de la matière solide et favorisant aussi la rupture de l'émulsion huile/eau. Cette extraction se fait alors par séparation du liquide de la matière solide, généralement par pressage ou décantation. Après la récupération du liquide qui contient de l'eau et de l'huile la séparation de ces deux éléments se fait par centrifugation ou décantation.

Le malaxage est réalisé dans des cuves dans lesquels des vis d'extraction sont en rotation permettant ainsi de malaxer la pâte d'olive. Le malaxage dure entre 30 et 40 minutes.

L'huile d'olive contient des produits polyphénoliques et des tocophérols dont les proportions varient selon le type d'olive et son degré de maturation, moins l'olive est mûre plus le taux de produits polyphénoliques est élevé.

Ces produits polyphénoliques et les tocophérols sont d'autant plus importants qu'ils sont des éléments anti-oxydants très intéressants du point de vue de la santé.

La présence d'oxygène lors du malaxage produit une oxydation des produits polyphénoliques et des tocophérols de l'huile d'olive ce qui a pour conséquence de réduire leurs proportions dans l'huile, de réduire la durée de conservation de l'huile et d'altérer le goût de l'huile.

On connaît déjà un malaxage anaérobie qui permet de réduire l'oxydation des produits polyphénoliques et des tocophérols de l'huile.

Lors du malaxage, des enzymes augmentent le rendement de l'extraction et accélèrent l'extraction de l'huile, des produits polyphénoliques et des tocophérols présents dans la pâte, en particulier en brisant les cellules d'olives qui libèrent ainsi l'huile. Ces enzymes ont besoin d'oxygène pour agir, un malaxage anaérobie n'est donc pas souhaitable.

Le problème est donc de réaliser un procédé de malaxage d'une pâte d'olive qui permet une utilisation d'oxygène pour permettre l'action des enzymes tout en évitant l'oxydation des produits polyphénoliques et des tocophérols de l'huile par l'oxygène.

Un objet de la présente invention est de proposer un procédé de malaxage d'une pâte d'olive qui ne présente pas les inconvénients de l'art antérieur.

A cet effet, est proposé un procédé de malaxage d'une pâte d'olive selon la revendication 1.

Avantageusement l'étape de maintien du taux d'oxygène à la valeur prédéterminée s'effectue par injection d'un gaz inerte ou un mélange de gaz inertes.

Avantageusement l'étape de maintien du taux d'oxygène à la valeur prédéterminée s'effectue par injection d'oxygène.

Avantageusement l'injection du gaz inerte et/ou de l'oxygène s'effectue par la partie supérieure de la cuve.

Avantageusement le procédé comprend une étape de remplissage de la cuve par un gaz jusqu'à obtenir une phase gazeuse conforme à la valeur prédéterminée avant l'étape de remplissage de la cuve par de la pâte d'olive.

Avantageusement l'étape de remplissage de la cuve par un gaz s'effectue par la partie inférieure de la cuve.

Avantageusement le contrôle du taux d'oxygène dans la cuve lors de l'étape de remplissage de la cuve par un gaz jusqu'à obtenir une phase gazeuse conforme à la valeur prédéterminée et de l'étape de maintien du taux d'oxygène à la valeur prédéterminée est réalisé par une unité de contrôle qui commande l'ouverture ou la fermeture de vannes d'alimentation en gaz de la cuve en fonction des informations qu'elle reçoit de la part de sondes de détection de la concentration en oxygène de la cuve.

La valeur prédéterminée est comprise entre 6% et 12%.

Avantageusement la valeur prédéterminée est de 6%.

L'invention propose aussi un dispositif de malaxage d'une pâte d'olive selon la revendication 9.

Avantageusement le dispositif comprend un conduit d'alimentation situé sur la partie supérieure de la cuve adapté à alimenter la cuve en gaz pour maintenir le taux d'oxygène à la valeur prédéterminée.

Avantageusement le dispositif comprend un conduit d'alimentation situé sur la partie inférieure de la cuve adapté à remplir la cuve par un gaz.

Selon un premier mode de réalisation la cuve est hermétique.

Selon un deuxième mode de réalisation la cuve n'est pas hermétique.

L'invention propose aussi une pâte d'olive caractérisée en ce qu'elle est obtenue selon le procédé de l'une des variantes précédentes.

Les caractéristiques de l'invention mentionnées ci-dessus, ainsi que d'autres, apparaîtront plus clairement à la lecture de la description suivante d'un exemple de réalisation, ladite description étant faite en relation avec la Fig. unique qui représente un dispositif de malaxage selon l'invention;

La Fig. unique représente un dispositif de malaxage 1, comprenant une cuve 2, qui peut avoir une forme générale cylindrique, dans laquelle est montée une vis de malaxage. Par sa rotation la vis entraîne la libération des gouttes d'huile prisonnières de la pâte et leur regroupement en gouttes plus grandes.

D'une façon classique, la cuve 2 comprend des dispositifs d'admission de la pâte dans la cuve 2 et de récupération de la pâte malaxée. La cuve 2 est remplie de la pâte à malaxer et d'une phase gazeuse.

Le dispositif de malaxage 1 comprend au moins une sonde de détection de la concentration en oxygène 3 qui permet de mesurer la concentration d'oxygène à l'intérieur de la cuve 2. Afin de mesurer la concentration en oxygène dans toute la cuve 2, plusieurs sondes de détection de la concentration en oxygène 3 sont réparties dans la cuve 2. Comme la pâte se retrouve dans la partie inférieure de la cuve 2 et que la phase gazeuse se retrouve dans la partie supérieure de la cuve 2, les sondes de détection de la concentration en oxygène 3 seront avantageusement placées dans la partie supérieure de la cuve 2.

Les sondes de détection de la concentration en oxygène 3 sont reliées par des fils de connexion 4 à une unité de contrôle 5.

La cuve 2 comprend un conduit supérieur d'alimentation Il et un conduit inférieur d'alimentation 12. Ces conduits permettent l'alimentation en gaz de la cuve 2. Le conduit supérieur d'alimentation 11 est situé sur la partie supérieure de la cuve 2. Le conduit inférieur d'alimentation 12 est situé sur la partie inférieure de la cuve 2.

Le gaz est stocké dans un réservoir (non montré) et arrive par un dispositif d'admission du gaz 10 relié aux conduits d'alimentation 11, 12.

L'admission générale du gaz dans le conduit supérieur d'alimentation 11 et le conduit inférieur d'alimentation 12 est commandée par une vanne d'alimentation générale 8.

L'admission du gaz dans le conduit inférieur d'alimentation 12 est aussi commandée par une vanne d'alimentation basse 9.

La vanne d'alimentation générale 8 est commandée par l'unité de contrôle 5, grâce à un câble de commande de l'alimentation générale 6.

La vanne d'alimentation basse 9 peut être commandée manuellement ou par l'unité de contrôle 5, grâce à un câble de commande de l'alimentation basse 7.

Pour éviter l'oxydation des produits polyphénoliques et des tocophérols de l'huile au cours du malaxage, la cuve 2 est remplie d'un gaz inerte tout en conservant une concentration d'oxygène suffisante à l'action des enzymes. Le gaz inerte peut être de l'argon de l'azote ou tout autre gaz qui empêche l'oxydation et qui est compatible avec une utilisation alimentaire.

Si la cuve 2 n'est pas hermétique, l'oxygène provient de l'air ambiant et si le taux d'oxygène est supérieur au taux prédéterminé alors le gaz inerte sera choisi pour abaisser le taux d'oxygène dans la cuve 2.

Si la cuve 2 n'est pas hermétique, l'oxygène provient de l'air ambiant et si le taux d'oxygène est inférieur au taux prédéterminé alors de l'oxygène avec ou sans gaz inerte sera introduit pour augmenter le taux d'oxygène dans la cuve 2.

Si la cuve 2 est hermétique et si le taux d'oxygène est inférieur au taux prédéterminé, alors l'oxygène sera introduit avec ou sans gaz inerte dans la cuve 2 sera introduit pour augmenter le taux d'oxygène dans la cuve 2.

Si la cuve 2 est hermétique et si le taux d'oxygène est supérieur au taux prédéterminé, alors du gaz inerte sera introduit dans la cuve 2 pour abaisser le taux d'oxygène dans la cuve 2.

Le gaz inerte pourra être un gaz inerte pur ou un mélange de gaz inertes.

Dans la suite de la description, l'alimentation en gaz de la cuve 2 signifiera que l'on introduit soit du gaz inerte, soit un mélange de gaz inerte et d'oxygène, soit de l'oxygène selon le taux d'oxygène présent dans la cuve 2 par rapport au taux prédéterminé.

Le procédé de fonctionnement est le suivant.

La pâte d'olive sera d'une façon classique introduite dans la cuve 2 pour y être malaxée.

Au cours du processus de malaxage, les sondes de détection de la concentration en oxygène 3 détectent la concentration de l'oxygène dans la cuve 2, l'information est alors envoyée à l'unité de contrôle 5 par les fils de connexion 4.

Selon la concentration d'oxygène qui a été programmée dans l'unité de contrôle 5, celle-ci commande l'ouverture ou la fermeture de la vanne d'alimentation générale 8, pour permettre l'alimentation en gaz de la cuve 2 et d'atteindre le taux d'oxygène prédéterminé. Au cours du malaxage, la vanne d'alimentation basse 9 est fermée pour éviter la pénétration de pâte dans le conduit inférieur d'alimentation 12, l'alimentation en gaz se fait alors par le conduit supérieur d'alimentation 11.

Avec ce procédé, la quantité d'oxygène optimale pour permettre l'action des enzymes tout en évitant l'oxydation des produits polyphénoliques et des tocophérols de l'huile est toujours garantie.

Le taux d'oxygène dans la phase gazeuse contenue dans la cuve 2 est ainsi maintenu à la valeur prédéterminée.

Avant le remplissage de la cuve 2 par la pâte, la cuve 2 peut être remplie de gaz pour obtenir une phase gazeuse dans la cuve 2 conforme au taux d'oxygène prédéterminé. Le remplissage se fera avantageusement par le conduit inférieur d'alimentation 12 à cause de la différence de masse de l'oxygène et du gaz inerte, ce qui permettra un remplissage optimal de la cuve 2 par le gaz. Cette étape de remplissage de la cuve 2 par le gaz avant l'introduction de la pâte est recommandée pour éviter l'oxydation lors de la phase de remplissage. Mais si le remplissage se fait d'une manière telle que l'oxydation n'a pas le temps de s'opérer avant que la régulation se fasse, cette étape peut être évitée.

Lorsque la concentration d'oxygène souhaitée dans la cuve 2 est atteinte, la vanne d'alimentation basse 9 est fermée manuellement ou par l'unité de contrôle 5 qui reçoit des informations de la part des sondes 3. La fermeture du conduit inférieur d'alimentation 12 se fait avantageusement au niveau de la cuve 2 pour éviter l'introduction de pâte dans le conduit inférieur d'alimentation 12 lors du remplissage de la cuve 2 par la pâte.

Les résultats des expériences ci-dessous montrent l'intérêt de la méthode, en particulier en ce qui concerne le taux de polyphénols et des tocophérols présents dans l'huile résultant de l'utilisation du procédé selon l'invention.

On notera:
Echantillon A, l'échantillon d'une huile obtenue à partir d'une pâte d'olive traitée selon la méthode de malaxage classique;
Echantillon B, l'échantillon d'une huile obtenue à partir d'une pâte d'olive traitée selon la méthode de l'invention avec un taux de 6% d'oxygène dans la cuve 2;

Les résultats sont regroupés dans le tableau suivant:

| Echantillon Test | A | B |
|---|---|---|
| Polyphénols (mg/Kg) | 207 | 535 |
| Tocophérols (mg/Kg) | 132 | 152 |

On remarque l'augmentation significative des teneurs en polyphénols et en tocophérols entre l'échantillon de référence A et l'échantillon produit à partir du procédé selon l'invention B.

Le taux d'oxygène prédéterminé est compris entre 6% et 12% en volume.

Avantageusement le taux d'oxygène prédéterminé est de 6% en volume, qui correspond à un taux optimal d'activité pour les enzymes.

Le taux d'oxygène prédéterminé dépend de la pâte d'olive traitée. Pour chaque pâte d'olive, un taux préférentiel d'oxygène doit être déterminé par différents essais qui permettent d'évaluer le taux de polyphénols contenu dans l'huile en fonction du taux d'oxygène présent dans la cuve 2.

Le malaxage a été décrit avec un dispositif à vis mais tout système peut être utilisé, comme les systèmes à meule et à raclette.

Le procédé peut être utilisé dans processus de production d'huile continu ou discontinu.

Dans l'invention décrite, la cuve 2 est munie d'un seul conduit supérieur d'alimentation 11 et d'un seul conduit inférieur d'alimentation 12, mais pour améliorer la répartition et l'homogénéisation de la phase gazeuse dans la cuve 2, plusieurs conduits d'alimentation similaires peuvent être mis en place dans la partie supérieure et la partie inférieure de la cuve 2.

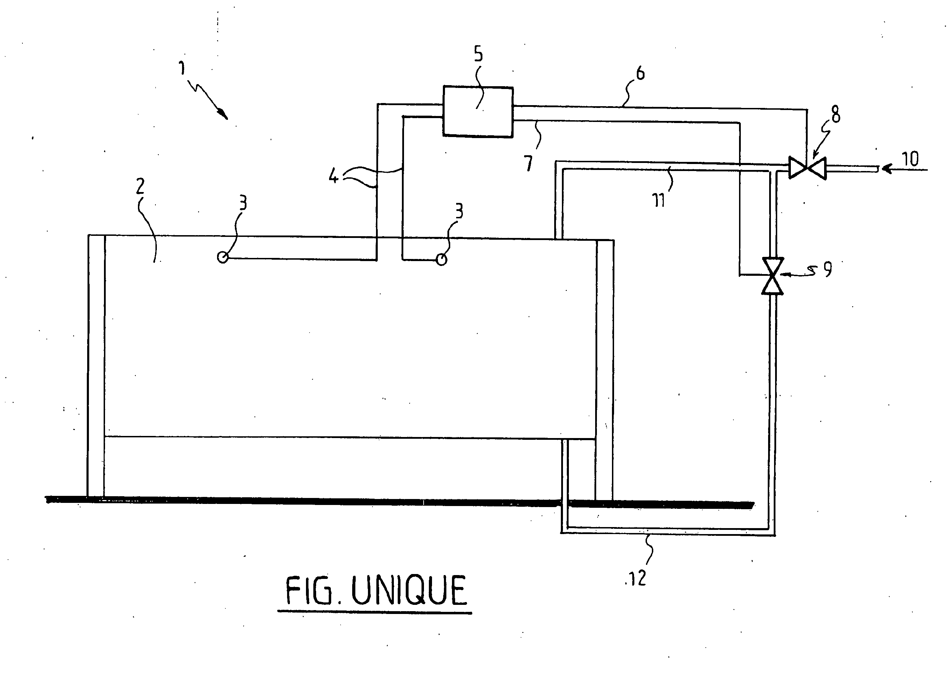

## Revendications

1. Procédé de malaxage d'une pâte d'olive dans une cuve (2) contenant la pâte d'olive et une phase gazeuse, le procédé comprenant :
- une étape de remplissage de la cuve (2) par de la pâte d'olive,
- une étape de malaxage de la pâte dans la cuve (2),
le procédé étant **caractérisé en ce qu**'il comprend une étape de maintien du taux d'oxygène de la phase gazeuse à une valeur prédéterminée comprise entre 6% et 12% en volume de manière à permettre l'activation des enzymes sans entraîner l'oxydation des produits polyphénoliques et des tocophérols contenus dans la cuve (2).

2. Procédé selon la revendication 1, **caractérisé en ce que** la valeur prédéterminée est de 6% en volume.

3. Procédé selon l'une des revendications 1 ou 2, **caractérisé en ce que** l'étape de maintien du taux d'oxygène à la valeur prédéterminée s'effectue par injection d'un gaz inerte ou un mélange de gaz inertes.

4. Procédé selon l'une des revendications 1 à 3, **caractérisé en ce que** l'étape de maintien du taux d'oxygène à la valeur prédéterminée s'effectue par injection d'oxygène.

5. Procédé selon l'une des revendications 3 ou 4, **caractérisé en ce que** l'injection du gaz inerte et/ou de l'oxygène s'effectue par la partie supérieure de la cuve (2).

6. Procédé selon l'une des revendications 1 à 5, **caractérisé en ce qu**'il comprend une étape de remplissage de la cuve (2) par un gaz jusqu'à obtenir une phase gazeuse conforme à la valeur prédéterminée avant l'étape de remplissage de la cuve (2) par de la pâte d'olive.

7. Procédé selon la revendication 6, **caractérisé en ce que** l'étape de remplissage de la cuve (2) par un gaz s'effectue par la partie inférieure de la cuve (2).

8. Procédé selon l'une des revendications 1 à 7, **caractérisé en ce que** le contrôle du taux d'oxygène dans la cuve (2) lors de l'étape de remplissage de la cuve (2) par un gaz jusqu'à obtenir une phase gazeuse conforme à la valeur prédéterminée et de l'étape de maintien du taux d'oxygène à la valeur prédéterminée, est réalisé par une unité de contrôle (5) qui commande l'alimentation ou non en gaz de la cuve (2) en fonction des informations qu'elle reçoit de la part de sondes (3) de détection de la concentration en oxygène de la cuve (2).

9. Dispositif de malaxage (1) d'une pâte d'olive comprenant une cuve (2) contenant la pâte à malaxer et une phase gazeuse dont le taux d'oxygène de la phase gazeuse est compris entre 6% et 12% en volume, le dispositif étant **caractérisé en ce qu'**il comprend :
- au moins une sonde de détection de la concentration en oxygène (3) pour mesurer la concentration d'oxygène dans la phase gazeuse de la cuve (2),
- au moins un conduit d'alimentation (11, 12) en gaz pour alimenter la cuve (2) en gaz,
- une unité de contrôle (5) adaptée à autoriser ou à interdire l'alimentation de la cuve (2) en gaz en fonction des informations qu'elle reçoit de la part de sondes (3) de détection de la concentration en oxygène de la cuve (2) afin de maintenir ledit taux d'oxygène entre 6% et 12% en volume.

10. Dispositif selon la revendication 9, **caractérisé en ce qu**'il comprend un conduit d'alimentation (11) situé sur la partie supérieure de la cuve (2) adapté à alimenter la cuve (2) en gaz pour maintenir le taux d'oxygène à la valeur prédéterminée.

11. Dispositif selon l'une des revendications 9 ou 10, **caractérisé en ce qu**'il comprend un conduit d'alimentation (12) situé sur la partie inférieure de la cuve (2) adapté à remplir la cuve (2) par un gaz.

12. Dispositif selon l'une des revendications 9 à 11, **caractérisé en ce que** le gaz est un gaz inerte ou un mélange de gaz inertes.

13. Dispositif selon l'une des revendications 9 à 13, **caractérisé en ce que** le gaz comprend de l'oxygène.

14. Dispositif selon la revendication 12 ou 13, **caractérisé en ce que** la cuve (2) est hermétique.

15. Dispositif selon l'une des revendications 12 ou 13, **caractérisé en ce que** la cuve n'est pas hermétique.

## Claims

1. Process for mixing an olive paste in a tank (2) containing olive paste and a gas phase, the process comprising:
- a stage of filling the tank (2) with olive paste,
- a stage of mixing the paste in the tank (2),
the process being **characterised in that** it includes a stage of maintaining the oxygen level of the gas phase at a predetermined value between 6% and 12% by volume so as to allow the activation of enzymes without giving rise to oxidation of the polyphenol and tocopherol products contained in the tank (2).

2. Process according to claim 1, **characterised in that** the predetermined value is 6% by volume.

3. Process according to one of claims 1 or 2, **characterised in that** the stage of maintaining the oxygen level at the predetermined value is performed by injecting an inert gas or a mixture of inert gases.

4. Process according to one of claims 1 to 3, **characterised in that** the stage of maintaining the oxygen level at the predetermined value is performed by injecting oxygen.

5. Process according to one of claims 3 or 4, **characterised in that** the inert gas and/or oxygen is injected through the upper part of the tank (2).

6. Process according to one of claims 1 to 5, **characterised in that** it includes a stage of filling the tank (2) with a gas until a gas phase which conforms with the predetermined value is obtained before the stage of filling the tank (2) with olive paste.

7. Process according to claim 6, **characterised in that** the stage of filling the tank (2) with a gas is performed through the lower part of the tank (2).

8. Process according to one of claims 1 to 7, **characterised in that** oxygen level in the tank (2) during the stage of filling the tank (2) with a gas until a gas phase is obtained which conforms with the predetermined value and the stage of maintaining the oxygen level at the predetermined value is controlled by means of a control unit (5) which controls the supply or otherwise of gas to the tank (2) depending on the information it receives from the sensors (3) detecting the concentration of oxygen in the tank (2).

9. Device for mixing (1) an olive paste comprising a tank (2) containing the paste to be mixed and a gas phase, the oxygen level of the gas phase being between 6% and 12% by volume, the device being **characterised in that** it includes:
- at least one oxygen concentration detection sensor (3) to measure the concentration of oxygen in the gas phase in the tank (2),
- at least one gas feed duct (11, 12) to supply the tank (2) with gas,
- a control unit (5) capable of authorising or prohibiting the supply of gas to the tank (2) depending on the information it receives from the sensors (3) detecting the concentration of oxygen in the tank (2) in order to maintain the said oxygen level between 6% and 12% by volume.

10. Device according to claim 9, **characterised in that** it includes a feed duct (11) situated on the upper part of the tank (2) capable of supplying the tank (2) with gas to maintain the oxygen level at the predetermined value.

11. Device according to one of claims 9 or 10, **characterised in that** it includes a feed duct (12) situated on the lower part of the tank (2) capable of filling the tank (2) with a gas.

12. Device according to one of claims 9 to 11, **characterised in that** the gas is an inert gas or a mixture of inert gases.

13. Device according to one of claims 9 to 13, **characterised in that** the gas includes oxygen.

14. Device according to claim 12 or 13, **characterised in that** the tank (2) is hermetically sealed.

15. Device according to one of claims 12 or 13, **characterised in that** the tank is not hermetically sealed.

## Patentansprüche

1. Verfahren zum Kneten von Olivenpaste in einem Behälter (2), der die Olivenpaste und eine Gasphase enthält, wobei das Verfahren umfasst:
- einen Schritt des Füllens des Behälters (2) mit der Olivenpaste;
- einen Schritt des Knetens der Paste in dem Behälter (2);
wobei das Verfahren **dadurch gekennzeichnet ist, dass** es einen Schritt des Aufrechterhaltens des Sauerstoffsgehalts der Gasphase auf einem vorherbestimmten Wert im Bereich zwischen 6 Vol.-% und 12 Vol.-% umfasst, um die Aktivierung der Enzyme zu ermöglichen, ohne die Oxidation der Polyphenol- und Tocopherolprodukte, die in dem Behälter (2) enthalten sind, mit sich zu bringen.

2. Verfahren nach Anspruch 1, **dadurch gekennzeichnet, dass** der vorherbestimmte Wert bei 6 Vol.-% liegt.

3. Verfahren nach einem der Ansprüche 1 oder 2, **dadurch gekennzeichnet, dass** der Schritt des Aufrechterhaltens des Sauerstoffsgehalts auf dem vorherbestimmten Wert durch Injektion eines inerten Gases oder eines Gemischs aus inerten Gasen durchgeführt wird.

4. Verfahren nach einem der Ansprüche 1 bis 3, **dadurch gekennzeichnet, dass** der Schritt des Aufrechterhaltens des Sauerstoffsgehalts auf dem vorherbestimmten Wert durch Injektion von Sauerstoff durchgeführt wird.

5. Verfahren nach einem der Ansprüche 3 oder 4, **dadurch gekennzeichnet, dass** die Injektion des inerten Gases und/oder des Sauerstoffs über den oberen Teil des Behälters (2) durchgeführt wird.

6. Verfahren nach einem der Ansprüche 1 bis 5, **dadurch gekennzeichnet, dass** es einen Schritt des Füllens des Behälters (2) mit einem Gas umfasst, bis eine Gasphase erhalten wird, die dem vorherbestimmten Wert entspricht, vor dem Schritt des Füllens des Behälters (2) mit der Olivenpaste.

7. Verfahren nach Anspruch 6, **dadurch gekennzeichnet, dass** der Schritt des Füllens des Behälters (2) mit einem Gas über den unteren Teil des Behälters (2) durchgeführt wird.

8. Verfahren nach einem der Ansprüche 1 bis 7, **dadurch gekennzeichnet, dass** die Kontrolle des Sauerstoffsgehalts in dem Behälter (2) während des Schritts des Füllens des Behälters (2) mit einem Gas, bis eine Gasphase erhalten wird, die einem vorbestimmten Wert entspricht, und dem Schritt des Aufrechterhaltens des Sauerstoffgehalts auf dem vorbestimmten Wert mit einer Kontrolleinheit (5) ausgeführt wird, die die Versorgung oder nicht Versorgung des Behälters (2) mit Gas in Abhängigkeit von den Informationen steuert, die sie von den Sonden (3) zur Detektion der Sauerstoffkonzentration des Behälters (2) empfängt.

9. Vorrichtung zum Kneten (1) einer Olivenpaste, die einen Behälter (2) umfasst, der die zu knetende Paste und eine Gasphase enthält, deren Sauerstoffgehalt der Gasphase im Bereich zwischen 6 Vol.-% und 12 Vol.-% liegt, wobei die Vorrichtung **dadurch gekennzeichnet ist, dass** sie umfasst:
- mindestens eine Sonde zur Detektion der Sauerstoffkonzentration (3), um die Sauerstoffkonzentration in der Gasphase im Behälter (2) zu messen;
- mindestens eine Gasversorgungsleitung (11, 12) um den Behälter (2) mit Gas zu versorgen;
- eine Kontrolleinheit (5), die angepasst ist, die Versorgung des Behälters (2) mit Gas in Abhängigkeit von den Informationen, die sie von den Sonden (3) zu Detektion der Sauerstoffkonzentration in dem Behälter (2) empfängt, zuzulassen oder nicht zuzulassen, um den genannten Sauerstoffgehalt zwischen 6 Vol.-% und 12.-% aufrecht zu erhalten.

10. Vorrichtung nach Anspruch 9, **dadurch gekennzeichnet, dass** sie eine Versorgungsleitung (11) umfasst, die auf dem oberen Teil des Behälters (2) angeordnet ist, die angepasst ist, um den Behälter (2) mit Gas zu versorgen, um den Sauerstoffgehalt auf dem vorbestimmten Wert aufrecht zu erhalten.

11. Vorrichtung nach einem der Ansprüche 9 bis 10, **dadurch gekennzeichnet, dass** sie eine Versorgungsleitung (12) umfasst, die auf im unteren Teil des Behälters (2) angeordnet ist, die angepasst ist, um den Behälter (2) mit einem Gas zu füllen.

12. Vorrichtung nach einem der Ansprüche 9 bis 11, **dadurch gekennzeichnet, dass** das Gas ein inertes Gas oder ein Mischung aus inerten Gasen ist.

13. Vorrichtung nach einem der Ansprüche 9 bis 13, **dadurch gekennzeichnet, dass** das Gas Sauerstoff umfasst.

14. Vorrichtung nach Anspruch 12 bis 13, **dadurch gekennzeichnet, dass** der Behälter (2) hermetisch verschlossen ist.

15. Vorrichtung nach einem der Ansprüche 12 oder 13, **dadurch gekennzeichnet, dass** der Behälter nicht hermetisch verschlossen ist.
